# NEW EUROPEAN PATENT SPECIFICATION

(11) **EP 1 170 846 B2**
(45) Date of publication and mention of the opposition decision: **07.11.2012**
(45) Mention of the grant of the patent: 26.10.2005
(21) Application number: 00114100.1
(22) Date of filing: 07.07.2000
(51) Int. Cl.: H02G 15/068, H02G 15/00

(54) **Method for manufacturing an outdoor termination for a high voltage cable**
Verfahren zur Herstellung eines Aussenendverschlusses für Hochspannungskabel
Procédé de fabrication d'une terminaison de câble haute tension à l'extérieur

(43) Date of publication of application: 09.01.2002
(73) Proprietor: PRYSMIAN Kabel und Systeme GmbH, 13599 Berlin (DE)
(72) Inventor: Goehlich, Lothar, Dipl.-Ing., 12109 Berlin (DE); Görk, Claude, 13629 Berlin (DE); Scharschmidt, Jörg, Dipl.-Ing., 13627 Berlin (DE); Weissenberg, Werner, Dr.-Ing., 14612 Falkensee (DE); Weinand, Robert, Dipl.-Ing., 10553 Berlin (DE)
(74) Representative: HOFFMANN EITLE

(56) References cited:
- EP-A1- 0 477 857
- EP-A1- 0 971 372
- DE-A- 2 105 892
- FR-A- 2 194 061
- FR-A- 2 210 034
- FR-A- 2 357 991
- GB-A- 1 440 604
- GB-A- 2 336 252
- US-A- 3 446 741
- US-A- 4 943 685

## Description

### FIELD OF THE INVENTION

The present invention relates to a method of making an outdoor termination for a high voltage cable.

Outdoor terminations for high voltage cables typically consist of an insulator body in which the high voltage cable with its insulated cable core is accommodated. The high voltage cable is typically insulated with plastic material and the interior of the insulator body must be filled with an insulating filling compound to provide the necessary insulation. Typically, an insulation fluid is used as the insulating compound. Due to the filling compound being a liquid, the design of the outdoor termination needs to be gastight and the insulating liquid must also be in a liquid phase at low operating temperatures. Furthermore, the insulator body must have such a construction that volume changes of the filling compound due to temperature changes do not cause pressure changes which damage the insulator body and possibly cause a leakage of insulating liquid.

Furthermore, the insulating liquid having the aforementioned characteristics of still being liquid at low operating temperatures are comparatively expensive.

GB-A 2 336 252, which is considered to represent the closest prior art, discloses a termination for an electric power cable. The insulation in this termination is inter alia achieved by way of a mixture of insulating granules and an electrically insulating fluid.

US 4,943,685 discloses a device for insulating and re-insulating cable splices and terminations. It pertains to the use of polymer gel with entrapped insulating fluid as an insulating means.

FR-A 2 357 991 discloses insulating masses on the basis of silicone polymers and glass beads.

The present invention in particular addresses the problem how an outdoor termination can be devised which is easy to manufacture, low-cost and is insensitive with respect to temperature changes.

### BACKGROUND OF THE INVENTION

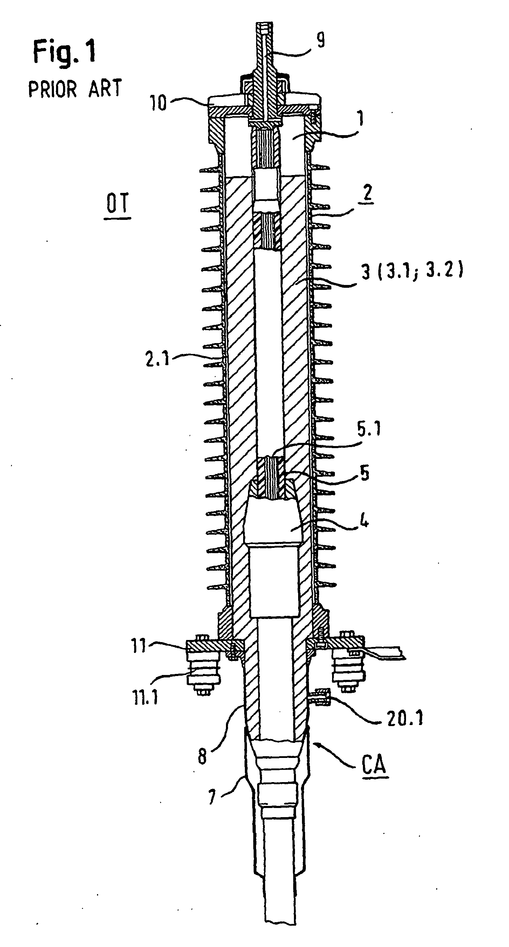

Fig. 1 shows a typical construction of an outdoor termination OT. It comprises an insulator body 2 having an upper cover 10 and a lower cover 11, preferably made of metal, i.e. an upper metal work 10 and a lower metal work 11. At the upper metal work 10 a conductor stalk 9 is provided with which the cable core 5.1 is connected. The lower metal work 10 is also connected to the insulator body 2 at a bottom portion thereof, for example by means of nuts and bolts 11.1.

Within the interior of the insulator body 2 the cable CA extends wherein the cable core 5.1 is surrounded by an insulation 5, which is typically a plastic insulation.

At the lower portion of the insulator body 2 the high voltage cable CA is surrounded by an antikinking protection 7 to avoid a breakage of the cable. Also provided at the lower metal work 11 (the base plate) there is an entrance bell 8 having a connector 20.1.

Through the entrance bell 8 the filling compound 3 can be injected into the interior of the insulator body 2 such that the filling compound 3 fills at least a portion of the space between the interior walls 2.1 of the insulator body 2 and the cable insulation 5. Typically the outdoor termination is mounted in a substantially upright position such that a cavity 1 is formed at an upper portion of the insulator body 2.

Furthermore, an electric field control means 4 in the form of a stress cone 4 is provided at a lower portion of the insulator body 2 around the cable insulation 5 in order to appropriately set the electric field conditions inside the insulator body 2. Typically, the insulator body 2 is made of porcelain or is a composite insulator of reinforced epoxy resin and silicone sheds.

The critical components in the outdoor termination OT shown in Fig. 1 are of course the upper and lower metal work 10, 11 and in particular the filling compound 3 itself, with respect to the liquid/gas-tightness and with respect to possible temperature fluctuations and pressure variations.

Firstly, the filling compound 3, e.g. conventionally an insulating fluid, must possess the required dielectric properties and it must be chemically neutral with respect to the material of the insulator body 2, the cable insulation 5 and the material of the stress cone 4.

Secondly, the insulating fluid must also be in a liquid phase at low operating temperatures. As mentioned above, such insulating liquids possess high costs. It must in particular be observed that such outdoor terminations for high voltage cables do possess quite large volumina in the interior of the insulator body 2 such that a cost-intensive filling compound 3 will drastically increase the total cost of the outdoor termination OT. Typically, the outdoor termination is between 2 and 5 m long and its interior volume is between 50 and 1000 litres.

Thirdly, it must be considered that the outdoor termination OT is arranged in open space and is thus exposed to all kinds of environmental influences, in particular large changes in temperature and/or large stresses due to snow or wind. Temperature changes cause changes in the volumina of the filling compound 3 accompanied by pressure changes. Even when large temperature changes occur, it must be avoided under all circumstances that a leakage occurs at the bottom part of the insulator body 2. On the other hand, when there is a large drop in temperature, it must be avoided that air is sucked into the cavity 1 at the top of the insulator body 2. Generally, it is accepted that the interior of the insulator body 2 must be protected against pressures of several bar.

To ensure that neither a leakage occurs at the bottom portion of the insulator body 2 nor air is sucked into the cavity 1, the insulator body 2 must be effectively sealed and this requires components with high precision. In turn, several mounting steps are necessary when mounting the outdoor termination OT in the environment and this adds to the cost of the outdoor termination OT.

Fourthly, even after installing the outdoor termination OT regular maintenance must be performed since loss of insulating liquid can substantially influence the operating characteristics of the outdoor termination.

Thus, on the one hand the substantial amount of expensive insulating liquid 3 increases the cost of the outdoor termination and on the other hand the provision of a liquid inside the insulator body 2 requires complicated mounting steps and requires regular maintenance. This applies to all high voltage cables CA, not only plastic insulated high voltage cables.

### DESCRIPTION OF THE PRIOR ART

A conventional solution to reduce the cost of the outdoor termination OT is to attempt to reduce the amount of necessary insulating fluid 3. For example, insulator bodies 2 have been suggested which have a tapered shape towards the upper portion of the insulator body 2 such that the interior volume of the insulator body 2 is decreased. In principle, this is possible because the electric field strength decreases towards the upper portion of the insulator body 2. Whilst in this manner the interior volume of the insulator body 2 can be decreased to some extent, on the other hand the manufacturing of a tapered insulator body 2 again increases the cost.

The maintenance work is essentially caused by the filling compound 3 being in a liquid state. Thus, conventionally also outdoor terminations OT have been suggested to dispose of the necessity to use an insulating fluid inside the insulator body 2. Three different possibilities have been investigated:

A first example is an outdoor termination where a rubber-elastic insulating body including an integrated stress cone is pressed into a solid insulating casing which is connected with an insulator and central conductor. Whilst the rubber-elastic insulating body provides the necessary electric insulation, this construction requires several components whose dimensions must be matched very accurately. This leads to high costs and requires several manufacturing steps also leading to an increase of the costs. Whilst the use of an insulating liquid is not necessary, on the other hand the assembly is rather rigid and thus does not easily allow some movement due to winds and short-circuits.

A second example uses a rubber-elastic or heat-shrinkable insulating sleeve. This leads to a less rigid assembly which cannot tolerate the above mentioned mechanical impacts.

A third example is suggested in "Elektrizitätswirtschaft, Jg. 99 (2000), Heft 11: Trockene Freiluftendverschlüsse mit Sttützeigenschaften" by R. Eitle and J. Kaumanns. Here, a dry rigid type outdoor termination is suggested. The solution presented here comprises a silicone-based liquid insulating material which cross-links in the outdoor termination only after having been filled in. The insulating material is compressible. This property is achieved by "micro-spheres" with which the insulating material is filled. These "micro-spheres" are cavities filled with gas which have a size of about 100 µm. The "micro-spheres" serve as compensating volumina. Thus, even at extreme temperature changes no damages due to cracks or gaps are caused. Furthermore, the solid insulation material has some electrical properties.

Since the insulating material is based on silicone, it has excellent thermal stability.

However, even in the third example with the cross-linking silicone-based material, there are disadvantages. Firstly, the cross-linking polymer is prepared on the basis of a silicone elastomer and spheres are hollow and are filled with gas. The thermal conductivity of the silicone elastomer is about 60 mW/mK and is thus only about 20% of the usual filling compound used in conventional outdoor terminations. For compensating this low thermal conductivity an increase of temperature must be avoided. Therefore, an additional heat compensating conductor having a large cross section needs to be mounted and this measure is very complicated and thus increases the costs.

A second disadvantage is the high viscosity of 17.000 mPa·s. Such a material cannot easily be inserted into the interior of the insulator body such that either large pressures are caused or long filling times are necessary. Therefore, the assembly of this type of outdoor termination is complicated (requires many different tools) and a large time is needed for the assembly.

The "micro-spheres" are hollow and are filled with gas in order to provide a compensating volume, for example during temperature changes. On the other hand, the gas in the hollow cavities in an insulating medium present a higher risk even if practical measurements of the partial discharge intensities are lower than 1pC. Furthermore, there is a risk that the gas gradually diffuses into the surrounding insulating material of silicone elastomer and that thus the pressure in the cavities is reduced. This reduction of pressure in the cavities also causes a decrease of the ignition voltage for partial discharges. Thus, partial discharges even at the normal operating voltage can take place and can destroy the dielectric.

### SUMMARY OF THE INVENTION

As explained above, the conventional outdoor terminations are either very cost-intensive and complicated to assemble since in the case of using a liquid insulating fluid measures need to be taken to avoid leakages of the fluid which in turn also causes a high maintenance effort. On the other hand, a filling compound consisting of micro-spheres and a cross-linking material on the basis of a silicone elastomer where the micro-spheres are filled with gas avoids the leakage problems but causes additional problems of possible partial discharges and/or the need for providing additional heat conductors.

Therefore, the object of the present invention is to provide a method of making an outdoor termination which can reduce the cost of the outdoor terminations without having the risk of partial discharges and damages to the dielectric.

This object is solved by the method for making an outdoor termination for a high voltage cable set forth in claim 1.

In accordance with the invention, the filling compound is a mixture of solid particles without cavities in a cross linked gel material such that the problems of partial discharges due to a possible gas leakage as in the prior art are avoided.

Preferably the material of said particles is selected from the group consisting of polyethylene, polyvinylchlorid, rubber, glass and porcelain.

Further preferably, the particles have a grain-, pellet- or ball-like shape. A preferable diameter for the particles is between 1 to 5 mm.

Preferably, the gel material cross-links with itself and spreads (e.g. wets) at least the solid particles and preferably also the insulator body interior walls and the cable insulation. Thus, a movement of the particles due to a temperature change induced volume change can take place. Further preferably, the gel material not only cross-links with itself but also cross-links with the solid particles and preferably also with the insulator body interior walls and with the cable insulation.

Further preferable the cross-linking capable material is an addition-curable compound, for example a two component silicon rubber material.

Preferably the particles are electrically conducting, for example made from conductive polyethylene.

Further preferably the solid particles are provided with a thin film to reduce the surface tension. The thin film can be a thin layer of a silicon oil.

It is also preferred that the solid particles are made of a low smoke toxic-free material.

Further advantageous embodiments and improvements of the invention can be taken from the dependent claims.

Furthermore, it should be noted that the present disclosure only reflects what the inventors presently conceive as the best mode of the invention and that further variations and modifications of the invention may be carried out on the basis of the teachings contained herein. In particular, the invention comprises embodiments consisting of combinations of features which have been separately described in the description and/or in the claims.

### BRIEF DESCRIPTION OF THE DRAWINGS

In the drawings the same or similar reference numerals denotes the same or similar parts and steps throughout.
- Fig. 1: shows an example of an outdoor termination OT in accordance with the prior art;
- Fig. 2: shows an example of an outdoor termination OT made in accordance with the invention; and
- Fig. 3a: shows a flowchart for manufacturing an outdoor termination OT; and
- Fig. 3b: shows an overview of an arrangement for inserting an insulating compound, in particular a cross-linking capable material, into the interior of an insulator body.

It should be noted that hereinafter the invention is described with respect to possible materials which can be used for manufacturing an outdoor termination for a high voltage cable. However, it should also be noted that in principle the filling compound described below in accordance with the invention may similarly be used as a dielectric for other insulation purposes, e.g. in telecommunication cables or in other environments where a high voltage insulation must be provided.

Fig. 1 shows an outdoor termination OT. It comprises, as described above, an insulator body 2 with some insulator body interior walls 2.1, an upper metal plate 10 (an upper metal work), a base plate (lower metal work) 11, a conductor stalk 9 and optionally an electric field control means 4 in the form of a stress cone 4.

It should be noted that in some embodiments the stress cone 4 may not be needed and therefore it may only be additionally provided. For example, the electric field control means, i.e. the stress cone 4, may in particular be disposed if the high voltage cable CA is a DC cable made of silicone carbide.

As described above, within the insulator body 2 the high voltage cable CA shown with its plastic insulation 5 is received. A preferred embodiment for the material of the insulator body 2 is a composite material or porcelain. Typically, the insulator body 2 is made of porcelain or is a composite insulator of reinforced epoxy resin and silicone sheds. A filling compound 3 is provided within the insulator body 2 and fills at least a portion of the space between the insulator body interior walls 2.1 and the cable insulation 5 such that a cavity 1 is formed at the upper portion of the insulator body 2 where the connection between the cable core 5.1 and the conductor stalk 9 is made.

In accordance with the first embodiment of the invention the filling compound 3 consists of a mixture of solid particles without cavities 3.1 and a cross linked gel material 3.2. Thus, the outdoor termination OT made in accordance with the invention consists of an outer insulator body 2 and an inner insulating compound 3, wherein the outer insulator 2 may be formed of a compound insulator, for example porcelain as in a conventional outdoor termination OT and the inner filling compound 3 is a mixture of said solid insulating particles 3.1 and a cross linked gel material 3.2.

A preferred material for the solid particles 3.1 is polyethylene, polyvinylchlorid (PVC), rubber, glass or porcelain. The solid insulating particles should preferably completely and evenly fill at least a portion of the space between the insulator body interior walls 2.1 and the cable insulation 5 and possibly, if provided, between the stress cone 4. Only the upper cavity 1 is not filled by the inventive filling compound 3. Furthermore, the solid particles 3.1 may be made of low smoke toxic-free material.

The solid insulating particles 3.1 are in a solid-state and not hollow and should preferably be free of inclusions of any foreign matter. Preferably, the solid particles are grain-, pellet- or ball-like shaped particles having a diameter between 1 to 5 mm.

The remaining places between the solid insulating particles 3.1 are filled with a cross linked gel material 3.2.

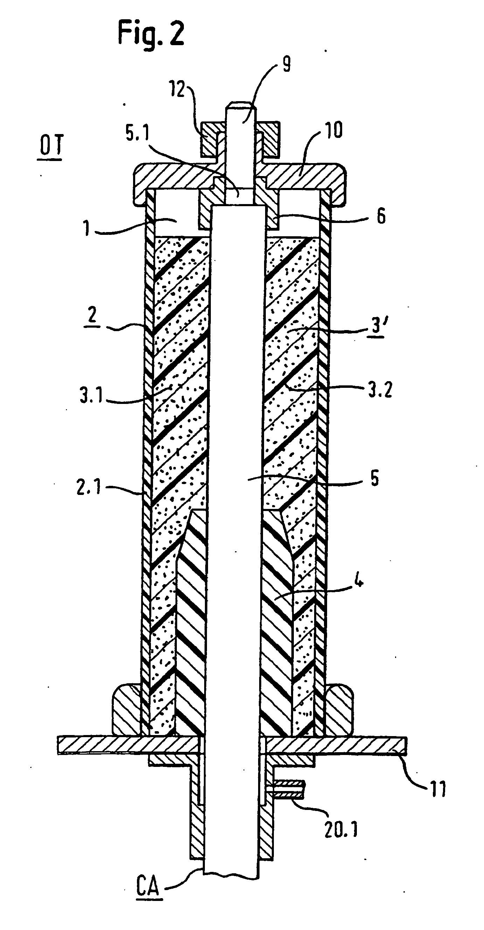

Fig. 2 shows an outdoor termination OT made in accordance with the invention. It comprises, similarly as the outdoor termination OT in Fig. 1, an insulator body 2 with some insulator body interior walls 2.1, an upper metal plate 10 (an upper metal work), a base plate (lower metal work) 11, a conductor stalk 9 and optionally an electric field control means 4 in the form of a stress cone 4. It should be noted that also in the embodiment in Fig. 2 the stress cone 4 may not be needed and therefore it may only be additionally provided. Furthermore, the outdoor termination OT in Fig. 2 comprises a sealing element 6 and some upper fixing means 12, e.g. a nut.

As in Fig. 1, also in Fig. 2 within the insulator body 2 the high voltage cable CA shown with its plastic insulation 5 is received. A filling compound 3' is provided within the insulator body 2 and fills at least a portion of the space between the insulator body interior walls 2.1 and the cable insulation 5 such that a cavity 1 is formed at the upper portion of the insulator body 2 where the connection between the cable core 5.1 and the conductor stalk 9 is made. As schematically shown in Fig. 2, the filling compound 3' consists of a mixture of solid particles 3.1 and a cross linked gel material 3.2. Thus, the outdoor termination OT made in accordance with the invention consists of an outer insulator body 2 and an inner insulating compound 3', wherein the outer insulator 2 may be formed of a compound insulator, for example porcelain.

As in the first embodiment a preferred material for the solid particles 3.1 is polyethylene, polyvinylchlorid (PVC), rubber, glass or porcelain. The solid insulating particles should preferably completely and evenly fill at least a portion of the space between the insulator body interior walls 2.1 and the cable insulation 5 and possibly, if provided, between the stress cone 4. Only the upper cavity 1 is not filled by the inventive filling compound 3'. The solid particles 3.1 may be made of low smoke toxic-free material.

The solid insulating particles 3.1 are not hollow and should preferably be free of inclusions of any foreign matter. Preferably, the solid particles are grain-, pellet- or ball-like shaped particles having a diameter between 1 to 5 mm.

In the embodiment shown in Fig. 2 as insulating compound 3.2 an insulating fluid is used which is only in a liquid-state when it is inserted into the insulator body 2. This insulating compound 3.2 is a cross-linking capable material which forms a gel after the cross-linking. Such an insulating compound is first in a liquid state over a predetermined time and cross-links after the insertion into the insulator body which has already been filled with the solid particles, e.g. PE-pellets.

The cross-linking is such that the material forms a gel which is cross-linked with itself and spreads (wets) the solid particles 3.1 and preferably also the insulator body interior walls 2.1 and the cable insulation 5. That is, the cross-linking capable material, after being filled in the insulator body interior as a liquid, cross-links with itself. Preferably, the material also performs a spreading (e.g. wetting) of the interior walls 2.1, of the cable insulation 5 and, if provided, of the stress cone surface 4. Thus, due to the spreading the cross-linked gel material somewhat sticks to the interior surface 2.1, the cable insulation 5 and possibly the stress cone surface 4, however, when temperature changes occur and thus a movement of the cross-linked material is caused, the sticking is such that the cross-linked material can be released from the respective surface and can move.

It is however also possible that the cross-linking material not only cross-links with itself but really also cross-links with the particles 3.1 and preferably also with the interior walls 2.1, the cable insulation 5 and the stress cone surface 4 (if provided).

After forming the gel, the viscosity of the cross-linked insulating fluid is so large that permanent seals in particular in the lower portion of the insulator body 2 can be disposed with or the sealing construction can at least be made simpler by contrast to the conventional outdoor terminations. There is no necessity for an absolute sealing at the lower portion. For example, the seals must only provide a temporary sealing function as long as the insulating fluid has not been fully cross-linked with the particles or preferably also with the interior walls and the cable insulation.

The amount of manufacture steps for making such an outdoor termination is drastically reduced. Since the filling compound of the outdoor termination is formed of a cross-linked gel-like material with a very high viscosity, a leakage as in conventional outdoor terminations is not possible any longer and the checking of the inner insulation of the outdoor termination over its lifetime is not necessary any longer.

A preferred material for the cross-linking capable material is a silicone gel or a cross-linking polybutene. If an electrical field control means is arranged within the insulator body 2, preferably the cross-linking material also performs a cross-linking with the exterior surface of the electric field control means, for example with the exterior surface of the stress cone 4.

It should be noted that the cross-linking capable material is a material which performs a cross-linking by itself, i.e. without applying heat to it. However, the cross-linking material may be an addition-curable compound, for example a two-component silicon rubber material. A preferred material is WACKER POWERSIL® -GEL 79039 available from WACKER. The aforementioned material is a pourable, addition-curing-two-component-silicone rubber which cures to a very soft, gel-like vulcanizate. This material is preferred, because it has in the liquid state a very low viscosity and a very low hardness (silicone gel) and has also a pronounced tackiness as well as excellent mechanical damping properties.

It should be noted that in particular the combination of the cross-linking capable gel material with solid particles which after cross-linking form a gel compound in which the pellets are included provide the major advantage of reducing the costs whilst still enabling that temperature changes do not cause damage of the outdoor insulation. That is, the viscosity of the cross-linking gel material is so low that a heat induced volume change can take place.

Thus, the suggested insulating compound is very different to known compounds where a substantial decrease of the viscosity occurs at increased temperatures. A preferred embodiment is the combination of the above described PE-pellets with a cross-linking silicone-gel like the SilGel 612 of the manufacture WACKER.

For improving the electric field control it is further preferred that the solid particles have special electrical or dielectric properties. For example, it may be preferred that the solid particles are electrically conducting and have a predetermined dielectric constant. The solid particles may be made from conductive polyethylene. Also the insulating fluid or the gel material may have such an electric conductivity. For example, for the particles a conductive polyethylene with a specific resistance between 10⁸ and 10¹⁰ Ω* cm may be used. This may cause a reduction of the diameter of the outer insulator body 2 as a consequence of the improvement of the electric field control by evenly distributing the voltage on the insulator body interior walls 2.1 and the adjacent air cavity 1.

Furthermore, it may be noted that the solid particles 3.1 may be provided with a thin film in order to reduce the surface tension. To reduce the surface tension, preferably the thin layer may be made of a silicon oil. If a thin layer is used, then this can cause an easier movement of the pellets with respect to each other and with respect to the insulating fluid or the gel material which forms the spaces between the particles.

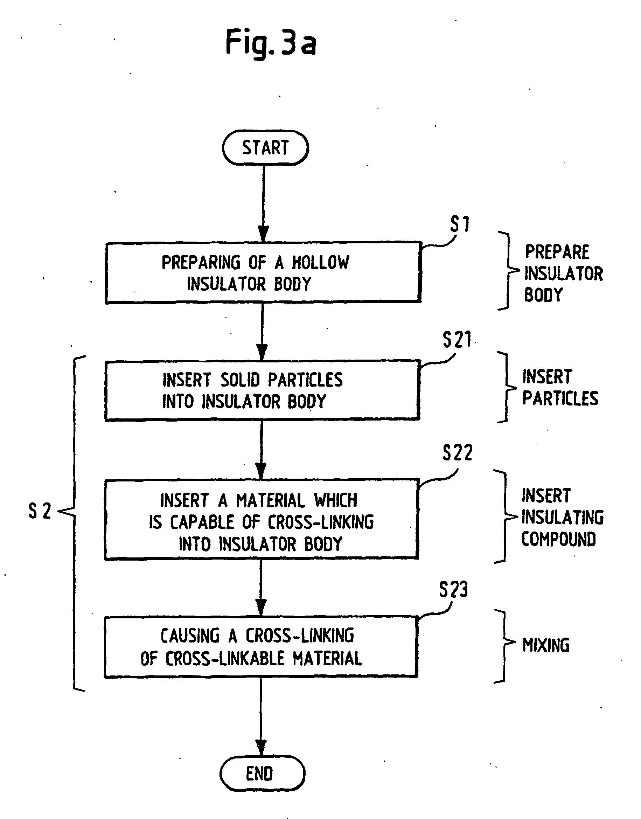

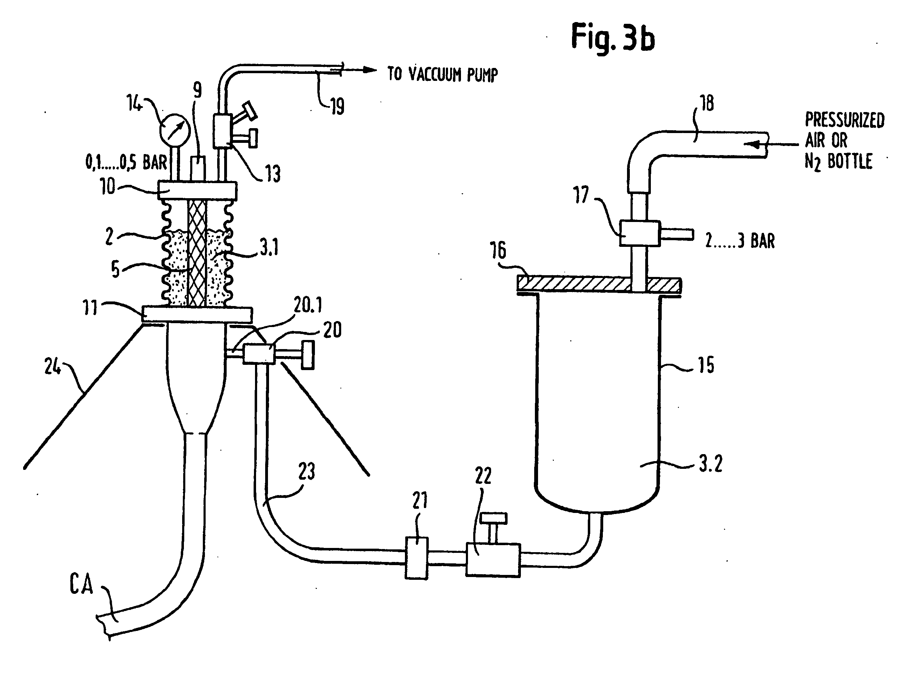

Fig. 3a shows an embodiment of a method for manufacturing an outdoor termination OT. Fig. 3b shows an apparatus for filling an insulating fluid into the insulator body interior.

In step S1 a hollow insulator body 2 with the parts as shown in Fig. 1 and Fig. 2 necessary for the electrical functioning of the outdoor termination is prepared. That is, all the elements 1, 2, 2.1, 3, 4, 5, 5.1, 6, 7, 8, 9, 10, 11, 11.1 are arranged such that the high voltage cable CA is provided with its inner insulation 5 inside the insulator body 2. As shown in Fig. 3b, the outdoor termination OT with its attached high voltage cable CA is arranged on a support 24 in a vertical arrangement.

In a second step, the filling compound 3' must be prepared as a mixture of the solid particles 3.1 and the insulating compound 3.2 within the interior of the insulator body 2. First, the solid particles are filled into the insulator body 2 from above, for example to a level as indicated in Fig. 3b, e.g. filling about 90% of the interior of the insulator body 2 such that only a predetermined space, e.g. a cavity, 1 is left at an upper portion of the insulator body 2.

Within a container 15 the insulating compound 3.2, i.e. the cross-linking gel material of silicon gel or a cross-linking polybutene or the WACKER POWERSIL®-Gel 79039 material is contained. In a second step S2 the insulating compound 3.2 is inserted into the insulator body 2, wherein the solid particles 3.1 and the insulating compound 3.2 are mixed.

Preferably, in step S22 the cross-linking material is fed from the container 15 to the insulator body 2 interior via a tube 23 through valves 21, 20, 22 in the following manner.

First, the valve 22 is closed and the valve 21, 20 is opened and the valve 13 is opened to evacuate the interior of the insulator body 2 to become a predetermined pressure of only 0.1 ... 0.5 bar. The pressure can be monitored by a pressure gauge 14. When the predetermined pressure has been obtained within the insulator body 2 the valve 13 is closed.

On the other hand, as also indicated in Fig. 3b, a closing lid 16 with a valve 17 is connected through a pipe 18 with a device which supplies pressurized air or N₂, e.g. from a N₂ bottle. A predetermined pressure of 2 to 3 bar is applied as a compression pressure into the container 15.

After the vacuum has been obtained within the insulator body 2 and the valve 13 has been closed, the valves 21, 22 are opened and the insulating compound 3.2, e.g. the cross-linking compound is pressed into the interior of the insulator body 2 to be mixed with the solid particles 3.1 already provided therein. During this process the insulating compound 3.2 is partially sucked into the insulator body 2 by the vacuum inside the insulator body 2 and is partially pressed by the pressure applied to the insulating compound 3.2 within the container 15.

Thus, in very short time, e.g. one to two minutes, a suspension is formed within the insulator body 2 and, as the insulating compound is a cross-linking capable material, the cross-linking process starts in step S23. During the cross linking process the material cross-links with itself and spread at least the solid particles and preferably also the insulator body interior walls, the base plate 11 surface and the cable insulation. It is also possible that the material not only cross-links with itself but cross-links also with the interior walls 2.1, the base plate surface 11, the cable insulation 5 and, if provided, with the stress cone surface 4. To end the insertion process eventually the valve 20 connected to the connector 20.1 is closed. Thus, the outdoor termination OT is completed.

Another embodiment of the filling method is described hereinafter. In this embodiment it is not necessary to use a vacuum in the outdoor termination, i.e. within the insulator body 2. It is only necessary to use a pressure in the container 15. However, it must still be guaranteed that there is a good wetting of the particles 3.1 by the insulation compound 3.2, and that there is a appropriate displacement of air from the places between the filling particles 3.1. Thus, the filling time must be sufficiently long, e.g. 30 to 60 minutes. Since the flow resistance of the particles 3.1 inside the insulator body 2 continuously increases with increasing filling duration, in accordance with the present embodiment it is provided that the filling pressure is continuously increased with increasing filling duration.

One possibility to achieve this continuously increasing pressure is to use a regulating means which gradually increases the pressure applied to the filling fluid inside the container 15. Another possibility is to use a pre-flow resistance which causes a continuous flow. This pre-flow resistance can for example be formed by the tube 23 if its free cross section is suitably dimensioned.

### INDUSTRIAL APPLICABILITY

As explained above, the manufacturing method for an outdoor termination can be used for AC and DC high voltage cables. It provides the major advantage of reducing the costs, because the amount of insulating fluid can be reduced due to the provision of the solid particles. Because a gel material is used, there is no need for complicated seals at the upper and lower portion of the insulator body.

Furthermore, various modifications and variations may be carried out on the basis of the teachings contained herein. In particular, the invention can comprise embodiments which consists of features and steps which have been separately described in the description and/or claimed in the claims.

Reference numerals in the claims only serve clarification purposes and do not limit the scope of these claims.

## Claims

1. A method of making an outdoor termination (OT) for a high voltage cable (CA), comprising:
**a)** an insulator body (2) for receiving the high voltage cable (CA) ;
**b)** a filling compound (3) provided within the insulator body (2) and filling at least a portion of the space between the insulator body interior walls (2.1) and the cable insulation (5);
**c1)** wherein said filling compound (3) consists of a mixture of particles (3.1) and an insulating compound (3.2); wherein
**c2)** said particles (3.1) are solid particles (3.1) without cavities, wherein
**c3)** said insulating compound (3.2) is a cross-linked gel material;
**c4)** said gel material (3.2) is one selected from the group consisting of silicone gel and cross-linked polybutene,
comprising the following steps:
**a)** preparing (S1) an insulator body (2) for receiving the high voltage cable (CA);
**b)** inserting (S2) a filling material (3) into the insulator body (2) to fill at least a portion of the space between the insulator body interior walls (2.1) and the cable insulation (5); whereby
**c)** said filling material (3) consists of solid particles (3.1) and an insulating compound (3.2); wherein
**d1)** in a first step (S21) said solid particles (3.1) are inserted in said insulator body (2) ;
**d2)** in a second step (S22, S23) said insulating compound (3.2) is pressed into the insulator body (2); wherein said solid particles (3.1) and said insulating compound (3.2) are mixed; wherein the filling pressure to continuously increased with increasing filling duration; and wherein
**d3)** said insulating compound (3.2) is a cross-linking capable gel material;
**d4)** said cross-linking capable material is one selected from the group consisting of silicone gel and cross-linking polybutene; and
**d5)** causing the cross-linking capable gel material, after being filled into said insulator body, to cross-link for forming a cross-linked gel material in said insulator body.

2. A method according to claim 1,
***characterized in that***
the material of said particles (3.1) is selected from the group consisting of polyethylene, polyvinylchlorid (PVC), rubber, glass and porcelain.

3. A method according to claim 1,
***characterized in that***
said cross-linking capable material is an addition-curable compound.

4. A method according to claim 3,
***characterized in that***
said cross-linking capable material is a two component silicone rubber material.

5. A method according to claim 1,
***characterized in that***
said particles (3.1) are provided with a thin film (3.11) to reduce the surface tension.

6. A method according to claim 5,
***characterized in that***
said thin film is a thin layer of silicone oil.

7. A method according to claim 1,
***characterized in that***
said particles (3.1) are made of a low smoke toxic-free material.

## Patentansprüche

1. Verfahren zur Herstellung einer Außenterminierung (OT) für ein Hochspannungskabel (CA) umfassend:
a) einen Isolatorkörper (2) zum Empfangen des Hochspannungskabels (CA);
b) eine Füllverbindung (3), die innerhalb des Isolatorkörpers (2) bereitgestellt ist und mindestens einen Teil des Raumes zwischen den Isolatorkörper-Innenwänden (2.1) und der Kabelisolierung (5) ausfüllt;
c1) wobei die Füllverbindung (3) aus einer Mischung von Teilchen (3.1) und einer isolierenden Verbindung (3.2) besteht;
wobei
c2) die Teilchen (3.1) massive Teilchen (3.1) ohne Kavitäten sind, wobei
c3) die isolierende Verbindung (3.2) ein vernetztes Gel-Material ist;
c4) das Gel-Material (3.2) eines ausgewählt aus der Gruppe ist, die aus einem Silicon-Gel und vernetztem Polybuten besteht,
umfassend die folgenden Schritte:
a) Herstellen (S1) eines Isolatorkörpers (2) zum Empfangen des Hochspannungskabels (CA);
b) Einfügen (S2) eines Füllmaterials (3) in den Isolatorkörper (2), um mindestens einen Teil des Raumes zwischen den Isolatorkörper-Innenwänden (2.1) und der Kabelisolierung (5) auszufüllen; wobei
c) das Füllmaterial (3) aus massiven Teilchen (3.1) und einer isolierenden Verbindung (3.2) besteht;
wobei
d1) in einem ersten Schritt (S21) die massiven Teilchen (3.1) in den Isolatorkörper (2) eingefüllt werden;
d2) in einem zweiten Schritt (S22, S23) die isolierende Verbindung (3.2) in den Isolatorkörper (2) gepresst wird; wobei die massiven Teilchen (3.1) und die isolierende Verbindung (3.2) gemischt werden, wobei der Fülldruck kontinuierlich mit steigender Fülldauer ansteigt; wobei
d3) die isolierende Verbindung (3.2) ein vernetzbares Gel-Material ist;
d4) das vernetzbare Material eines ausgewählt aus der Gruppe ist, bestehend aus einem Silicon-Gel und vernetzendem Polybuten; und
d5) Herbeiführen des vernetzbaren Gel-Materials, nach dem es in den Isolatorkörper eingefüllt wird, um eine Vernetzung hervorzurufen zum Bilden eines vernetzten Gel-Materials in dem Isolatorkörper.

2. Verfahren nach Anspruch 1, **dadurch gekennzeichnet, dass** das Material der Teilchen (3.1) aus der Gruppe ausgewählt wird, bestehend aus Polyethylen, Polyvinylchlorid (PVC), Gummi, Glas und Porzellan.

3. Verfahren nach Anspruch 1, **dadurch gekennzeichnet, dass** das vernetzbare Material eine Zusatz-aushärtbare Verbindung ist.

4. Verfahren nach Anspruch 3, **dadurch gekennzeichnet, dass** das vernetzbare Material ein Zweikomponenten-Silicon-Gummi-Material ist.

5. Verfahren nach Anspruch 1, **dadurch gekennzeichnet, dass** die Teilchen (3.1) innerhalb eines dünnen Films (3.11) bereitgestellt werden, um die Oberflächenspannung zu reduzieren.

6. Verfahren nach Anspruch 5, **dadurch gekennzeichnet, dass** der dünne Film eine dünne Schicht von Siliconöl ist.

7. Verfahren nach Anspruch 1, **dadurch gekennzeichnet, dass** die Teilchen (3.1) aus Niedrig-Rauch-nichttoxischem Material hergestellt sind.

## Revendications

1. Procédé de fabrication d'une terminaison d'extérieur (OT) pour un câble haute tension (CA), qui comporte :
a) un corps d'isolateur (2) destiné à recevoir le câble haute tension (CA) ;
b) un matériau de remplissage (3) disposé à l'intérieur du corps d'isolateur (2) et remplissant au moins une partie de l'espace situé entre les parois internes (2.1) du corps d'isolateur et l'isolant (5) du câble ;
c1) dans lequel ledit matériau de remplissage (3) est constitué d'un mélange de particules (3.1) et d'un composant isolant (3.2) ; dans lequel
c2) lesdites particules (3.1) sont des particules solides et pleines (3.1) sans cavités, dans lequel
c3) ledit composant isolant (3.2) est un matériau de type gel réticulé ;
c4) ledit matériau de type gel (3.2) est choisi parmi un gel de silicone et un polybutène réticulé,
comprenant les étapes suivantes :
a) préparation (S1) d'un corps d'isolateur (2) destiné à recevoir le câble haute tension (CA) ;
b) insertion (S2) d'un matériau de remplissage (3) dans le corps d'isolateur (2) pour remplir au moins une partie de l'espace situé entre les parois internes (2.1) du corps d'isolateur et l'isolant (5) du câble ; moyennant quoi
c) ledit matériau de remplissage (3) étant constitué d'un mélange de particules solides et pleines (3.1) et d'un composant isolant (3.2) ; dans lequel
d1) dans une première étape (S21), lesdites particules solides (3.1) sont introduites dans ledit corps d'isolateur (2) ;
d2) dans une deuxième étape (S22, S23), ledit composant isolant (3.2) est pressé dans le corps d'isolateur (2), lesdites particules solides (3.1) et ledit composant isolant (3.2) étant mélangés ; dans lequel la pression de remplissage est augmentée continuellement avec l'augmentation de la durée de remplissage ; et dans lequel
d3) ledit composant isolant (3.2) est un matériau réticulable de type gel ;
d4) ledit matériau réticulable est choisi parmi un gel de silicone et un polybutène réticulé ; et
d5) le matériau réticulable de type gel, après avoir été rempli dans ledit corps d'isolateur, est soumis à une réticulation pour former un matériau de type gel réticulé dans ledit corps d'isolateur.

2. Procédé conforme à la revendication 1, **caractérisé en ce que** le matériau desdites particules (3.1) est choisi parmi un polyéthylène, un polychlorure de vinyle (PVC), un caoutchouc, un verre et une porcelaine.

3. Procédé conforme à la revendication 1, **caractérisé en ce que** ledit matériau réticulable est un composé durcissable par réaction d'addition.

4. Procédé conforme à la revendication 3, **caractérisé en ce que** ledit matériau réticulable est un matériau de type caoutchouc de silicone bi-composant.

5. Procédé conforme à la revendication 1, **caractérisé en ce que** lesdites particules (3.1) sont munies d'une mince pellicule (3.11) destinée à réduire la tension superficielle.

6. Procédé conforme à la revendication 5, **caractérisé en ce que** ladite pellicule mince est une mince couche d'huile de silicone.

7. Procédé conforme à la revendication 1, **caractérisé en ce que** lesdites particules (3.1) sont faites d'un matériau non-toxique et n'émettant que peu de fumées.
